# EUROPÄISCHE PATENTSCHRIFT

(11) **EP 2 110 281 B1**
(45) Veröffentlichungstag und Bekanntmachung des Hinweises auf die Patenterteilung: **25.07.2012**
(21) Anmeldenummer: 09165644.7
(22) Anmeldetag: 12.09.2005
(51) Int. Cl.: B60N 2/66, B60N 2/44, B60N 2/64

(54) **Sitz mit Ergomechanik**
Seat with ergo-mechanics
Siège doté d'une mécanique ergonomique

(30) Priorität: 17.09.2004 DE 102004045573
(43) Veröffentlichungstag der Anmeldung: 21.10.2009
(62) Teilanmeldung aus: 05108326.9
(73) Patentinhaber: GRAMMER AG, 92224 Amberg (DE)
(72) Erfinder: Kohl, Josef, 92242 Hirschau (DE); Meiller, Hermann, 92533 Wernberg-Köblitz (DE)
(74) Vertreter: Hannke, Christian

(56) Entgegenhaltungen:
- US-A- 5 558 398

## Beschreibung

Die Erfindung betrifft einen Sitz mit Rückenlehne und Sitzteil, insbesondere für Fahrzeuge, wobei die Rückenlehne einen Rückenlehnenrahmen und dazwischen angeordnete Elemente zur Bildung einer S-förmigen Rückenlehne mit einem in Vorwärts- oder Rückwärtsrichtung verformbaren Schulterbereich und einem in Vorwärts- oder Rückwärtsrichtung verformbaren Lendenwirbelbereich umfasst, gemäß dem Oberbegriff des Patentanspruches 1.

Sitze mit verformbaren Rückenlehnen sind in vielfältiger Weise bekannt. Beispielsweise weisen herkömmliche Autos sowie Lkw's Fahrzeugsitze auf, die mit einer verstellbaren Lendenstütze im Bereich der Lendenwirbel einer den Fahrzeugsitz benutzenden Person ausgestattet sind. Derartige Lendenstützen können sowohl in Vorwärts- als auch in Rückwärtsrichtung verstellt werden, um durch eine konvexartige Verformung der Rückenlehne im Lendenwirbelbereich eine mehr oder weniger starke Stütze für die Person in Abhängigkeit davon, ob diese ein mehr oder weniger starkes Hohlkreuz aufweist, zur Erhöhung des Sitzkomforts zur Verfügung stellen. Derartige Lendenwirbelstützen werden von der Person in ihrer Verformung voreingestellt und verbleiben in dieser Form, bis die Person beispielsweise durch Betätigung eines Handrades diese neu einstellt. Dies erfordert die Zuhilfenahme mindestens einer Hand, welche während des Fahrzustandes des Fahrzeuges häufig nicht zur Verfügung steht.

Zudem sind Fahrzeugsitze häufig derart konzipiert, dass sie für eine Durchschnittsgröße der sie benutzenden Person in ihrer Idealform ausgebildet sind, also einen in Fahrrichtung gesehen konkav ausgebildeten Schulterbereich und einen konvex ausgebildeten Lendenwirbelbereich zur Bildung einer S-Form der Rückenlehne, die an die Wirbelsäulenform eines durchschnittlich großen Menschen angepasst ist, aufweisen.

Dies hat zur Folge, dass überdurchschnittlich große und kleine Menschen einen geringen Sitzkomfort in derartigen Fahrzeugsitzen genießen.

Hinzu kommt, dass insbesondere Lkw-Fahrer täglich bis zu 10 Stunden in einem Fahrersitz in einer relativ starren Sitzposition aufgrund des Festhaltens des Lenkrades mit den Händen und der Anordnung ihrer Füße auf den Pedalen und ihrem nach vorne gerichteten Blick verbringen. Eine derartige Sitzposition ist nicht nur ermüdend, sondern aufgrund der Dauerbelastung weniger Muskelpartien gesundheitsschädlich. Eine Veränderung der Sitzposition durch beispielsweise Verstellen der Lendenwirbelstütze oder eine gegebenenfalls vorhandene Höhenverstellung der Rückenlehne erfordert die Zuhilfenahme der Hände zur Betätigung einer handbetätigten oder elektronischen Verstellvorrichtung, wodurch nachteilhaft die Fahrsicherheit während der Fahrt beeinträchtigt wird.

Weiterhin sind Sitze bekannt, deren Rückenlehne sich in ihrer S-Form durch ein Nachhintenneigen der Rückenlehne verstellt, wodurch sich die Blickrichtung der den Sitz benutzenden Person verändert und sich eine ungewollte Veränderung des Winkels zwischen Ober- und Unterkörper der Person einstellt.

US 5,558,398 offenbart eine Rückenlehne eines Sitzes, deren Kontur mittels der Aufbringung von Druckluft verformbar bzw. einstellbar ist. Mit der Druckluft werden insbesondere mehrere nebeneinander vorgesehene Bälge beaufschlagt. Allerdings muss zur Einstellung der Rückenkontur Druckluft extern bereitgestellt werden. Zur Einstellung der Rückenkontur müssen ebenso eine Vielzahl von Bälgen verwendet werden, die zum einen zu hohen Herstellungskosten und zum anderen zu einem erhöhten Ausfallrisiko beitragen.

Es ist daher Aufgabe der vorliegenden Erfindung, einen Fahrzeugsitz bereit zu stellen, dessen Rückenkontur auf günstige, komfortable, konstruktiv einfache und funktionssichere Weise einstellbar ist.

Diese Aufgabe wird gemäß den Merkmalen des Patentanspruches 1 gelöst.

Ein wesentlicher Punkt der Erfindung liegt darin, dass bei einem Sitz mit Rückenlehne und Sitzteil, insbesondere für Fahrzeuge, wobei die Rückenlehne einen Rückenlehnenrahmen und dazwischen angeordnete Elemente zur Bildung einer S-förmigen Rückenlehne mit einem in Vorwärts- oder Rückwärtsrichtung verformbaren Schulterbereich und einem in Vorwärts- oder Rückwärtsrichtung verformbaren Lendenwirbelbereich umfasst, die Elemente um eine zwischen dem Schulter- und dem Lendenwirbelbereich sich horizontal erstreckende durch den Rahmen oder parallel dazu verlaufende, imaginäre Achse derart gelagert sind, dass ohne Veränderung einer gegenüber dem Sitzteil bestehenden Neigungsstellung der Rückenlehne durch eine Verformung des Schulterbereichs bzw. Lendenwirbelbereichs in Rückwärtsrichtung selbsttätig eine Verformung des Lendenwirbelbereichs bzw. Schulterbereichs in Vorwärtsrichtung einstellbar ist. Die Elemente umfassen nur eine obere und nur eine untere Gasblase, die ober- und unterhalb der imaginären Achse angeordnet ist, wobei die Gasblasen mittels eines Sperrventils und einer Verbindungsleitung zum Austausch von Gas miteinander verbunden sind und das Sperrventil zur Vermeidung eines Gasaustausches zwischen den Gasblasen zur Einstellung einer dauerhaften S-Form verwendbar ist, wobei eine Veränderung im Schulter- und Lendenbereich der Rückenlehne in ihrer Geschwindigkeit durch das Sperrventil variierbar ist. Demzufolge kann der Fahrer eines Fahrzeuges durch Druckausübung mittels seiner Schultern beispielsweise eine nach innen gerichtete stärkere Wölbung des Schulterbereichs der Rückenlehne und gleichzeitig eine nach außen bzw. in Fahrtrichtung vorwärts gerichtete stärkere Wölbung des Lendenwirbelbereichs der Rückenlehne erhalten. Eine entgegengesetzte Bewegung bzw. Verformung der S-förmigen Rückenlehne lässt sich durch eine nach hinten gerichtete Druckausübung der Lendenwirbel der Person im Lendenwirbelbereich der Rückenlehne erreichen, wodurch der Lendenwirbelbereich eine geringer nach vornegerichtete Wölbung einnimmt, während sich gleichzeitig im Schulterbereich der Rückenlehne eine geringere nach hinten gerichtete Wölbung ausbildet.

Auf diese Weise kann durch eine Gewichtsverlagerung im Oberkörperbereich der Person eine geänderte Rückenlehnenkonturkrümmung erhalten werden, die zu einer neuen gestützten Wirbelsäulenkrümmung der Person führt.

Da eine derartige Änderung der Rückenlehnenkonturkrümmung auf einfache Weise durch eine Gewichtsverlagerung im Oberkörperbereich erhalten werden kann, kann diese entsprechend häufig auch während des Fahrzustandes des Fahrzeuges durchgeführt werden, wodurch aufgrund der häufigen Bewegung Bandscheibenschäden vermieden werden können und dauerhaft belastete Muskelpartien entlastet werden. Durch eine kontinuierlich durchgeführte Veränderung der dadurch erhaltenen Wirbelsäulenkrümmung ist sogar ein Massageeffekt erhältlich.

Die Elemente umfassen die mindestens eine obere und die untere Gasblase, die ober- und unterhalb der imaginären Achse angeordnet sind. Die Gasblasen sind mittels des Sperrventils zum Austausch von Gas miteinander verbunden, so dass bei Belastung der oberen Gasblase durch die Schultern der Person Gas in die untere Gasblase strömt, wobei die dadurch bedingte Veränderung im Schulter- und Lendenbereich der Rückenlehne in ihrer Geschwindigkeit durch das Sperrventil variiert werden kann. Das Sperrventil kann zudem zur Vermeidung von Gasaustausch zwischen den beiden Gasblasen verwendet werden, so dass sich eine dauerhafte S-Form der Rückenlehne einstellt.

Gemäß einer nicht zur Erfindung gehörenden Ausführung umfassen die Elemente mindestens eine sich in Längsrichtung der Rückenlehne erstreckende S-förmige Stange, die mit ihren unteren und oberen Enden am Rückenlehnenrahmen um in Längsrichtung der Rückenlehne ausgerichtete Achsen schwenkbar gelagert sind. Sofern mindestens zwei derartige S-förmige Stangen angeordnet sind, sind diese in ihren Schwenkbewegungen mittels eines Verbindungselementes synchronisiert, wobei des Verbindungselement vorzugsweise als ein mit beiden Stangen gelenkig verbundenes Synchronisiergestänge ausgebildet ist.

Die S-förmigen Stangen, die mit einem flexiblen, plattenähnlichen Element zur Abstützung eines Rückenlehnenpolsters abgedeckt sind, können um einen Winkel von maximal 90° zur stufenlosen Veränderung von Kurvenbögen der S-Form der Rückenlehne oder zur Einstellung eines sich in Längsrichtung in einer Ebene erstreckenden Rückenlehne verschwenkt werden. Demzufolge ergibt sich eine in Längsrichtung vollständig ebene Rückenlehne, wenn die Stangen in eine Position geschwenkt sind, in welcher ihre zweidimensional ausgebildete S-Form in Breitenrichtung der Rückenlehne ausgerichtet sind.

Demgegenüber ergibt sich eine S-förmige Rückenlehne mit starken Wölbungen im Schulter- und Lendenwirbelbereich dann, wenn die S-Form der Stangen in Längsrichtung des Fahrzeugsitzes, also um 90° gedreht, ausgerichtet sind. Zwischen diesen beiden Extremschwenkstellungen der Stangen kann durch Verdrehen der Stangen jede beliebige Wölbung im Schulter- und Lendenwirbelbereich der Rückenlehne stufenlos eingestellt werden.

Weiterhin weisen die Stangen eine erste Arretierungseinrichtung zur Arretierung der Stangen in einer ausgewählten Schwenkposition auf. Eine derartige Arretierungseinrichtung ist aus einem mit beiden Stangen gelenkig verbundenen sich im Wesentlichen horizontal erstreckenden Gestänge und einer das Gestänge spiralförmig umgreifenden Feder zusammengesetzt, wobei die Feder mit dem Rückenlehnenrahmen verbunden ist und ihre Enden zur Veränderung ihres Innendurchmessers radial zueinander verdreht werden können. Durch das Auf- und Zudrehen der Feder findet ein mehr oder weniger starkes Umklammern der Feder an der Oberfläche des Gestänges mit einem bevorzugt kreisförmigen Querschnitt statt. Dies hat zur Folge, dass aufgrund der starken Reibungskräfte zwischen dem Federinneren und dem Gestänge eine Bremswirkung oder sogar eine Arretierung der Stangen in ihrer Schwenkbewegung erhalten wird.

Gemäß einer weiteren nicht zur Erfindung gehörenden Ausführung können die Elemente sich aus mindestens drei sich in Breitenrichtung der Rückenlehne erstreckende Plattenelemente zusammensetzen, die mittels eines im unteren Lendenwirbelbereich und eines oberen im Schulterbereich horizontal ausgerichteten Gelenklagers miteinander verbunden sind. Hierbei ist die reale Achse mit der zwischen den Gelenklagern angeordneten mittleren Platte verbunden. Die Verwendung von Platten anstelle von S-förmigen Stangen erübrigt die zusätzliche Anordnung einer flexiblen plattenähnlichen Abdeckung.

Die mindestens drei Platten können zusätzlich eine zweite Arretierungseinrichtung zur Arretierung der realen Achse in ihrer Drehbewegung gegenüber dem Rückenlehnenrahmen und/oder der mittleren Platte aufweisen, so dass hierdurch die gewünschte S-Form der Rückenlehne dauerhaft eingestellt werden kann. Dies ermöglicht beispielsweise eine gewollte nach vorne gerichtete starke Wölbung der Rückenlehne im Lendenwirbelbereich, um durch die Rückenlehne einen stärkeren Druck auf die Lendenwirbel der Person auszuüben.

Die drei Platten haben aufgrund ihrer Schwenkbewegung um die Gelenklager und die reale Achse in ihrer Gesamtheit eine unterschiedlich starke Ausdehnung in Längsrichtung der Rückenlehne. Dies erfordert am Rückenlehnenrahmen befestigte Gleitlager am unteren Ende der unteren Platte und am oberen Ende der oberen Platte zur gleitenden Abstützung der unteren und oberen Platte gegenüber dem Rückenlehnenrahmen während einer Veränderung der S-Form der Rückenlehne durch Verschwenken der Platten.

Vorteile und Zweckmäßigkeiten sind der nachfolgenden Beschreibung in Verbindung mit der Zeichnung zu entnehmen. Hierbei zeigt:
- Fig. 1: eine schematische perspektivische Ansicht eines Fahrzeugsitzes mit gera- der Rückenlehne;
- Fig. 2: in einer schematischen Rückansicht den Fahrzeugsitz mit gerader Rücken- lehne;
- Fig. 3: in einer schematischen perspektivischen Ansicht den Fahrzeugsitz mit ver- formter Rückenlehne;
- Fig. 4: in einer schematischen Rückansicht den Fahrzeugsitz mit verformter Rü- ckenlehne;
- Fig. 5: eine schematischen Ausschnittsdarstellung von Verbindungs- und Arretie- rungselementen für den Fahrzeugsitz;
- Fig. 6: in einer schematischen perspektivischen Ansicht einen Fahrzeugsitz mit einer geraden Rückenlehne;
- Fig. 7: in einer schematischen perspektivischen Ansicht den Fahrzeugsitz mit ver- formter Rückenlehne;
- Fig. 8: in einer schematischen perspektivischen Ansicht einen Fahrzeugsitz mit nahezu gerader Rückenlehne gemäß einer Ausführungsform der Erfin- dung; und
- Fig. 9: in einer schematischen perspektivischen Ansicht der Fahrzeugsitz mit ver- formter Rückenlehne gemäß der Ausführungsform der Erfindung.

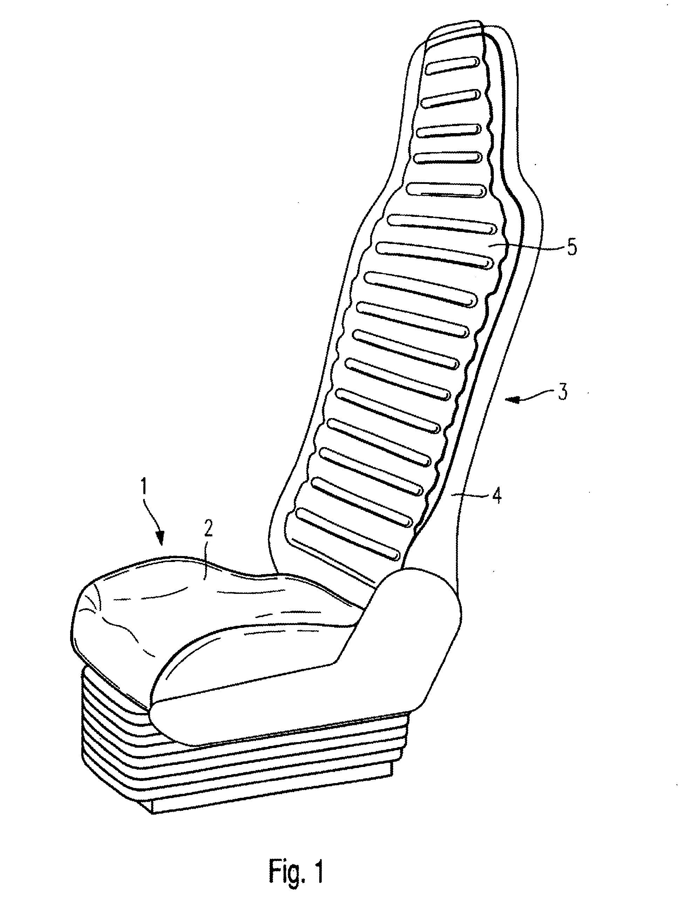

In Fig. 1 wird in einer schematischen perspektivischen Ansicht ein Fahrzeugsitz mit gerader Rückenlehne gezeigt. Der Fahrzeugsitz setzt sich aus einem Sitzteil mit einem Sitzpolster 2 und einer Rückenlehne 3 mit einem Rückenlehnenrahmen 4 zusammen.

Zwischen dem Rückenlehnenrahmen ist ein flexibles, plattenähnliches Element 5 mit in Horizontalrichtung verlaufenden Ausnehmungen als Auflage für dahinter befindliche Stangen angeordnet. Ein Rückenlehnenpolster ist in dieser Darstellung nicht wiedergegeben.

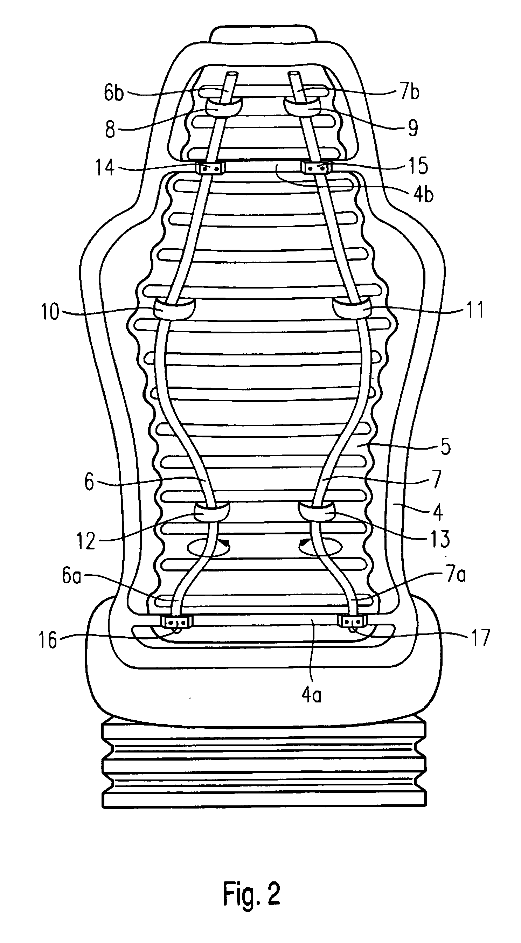

In Fig. 2 wird der Fahrzeugsitz mit gerader Rückenlehne in einer Rückansicht dargestellt. Wie der Darstellung zu entnehmen ist, sind an dem Rückenlehnenrahmen 4 zwei nebeneinander angeordnete im Wesentlichen S-förmige Stangen 6, 7 befestigt, die mit dem flexiblen plattenähnlichen Element 5 mittels schlaufenartiger Verbindungen 8, 9, 10, 11, 12, 13 oder gleichwirkenden Verbindungselementen verbunden sind.

Die S-förmigen Stangen 6, 7 sind bei einer geraden Rückenlehne derart angeordnet, dass sich ihre S-Form in Breitenrichtung der Rückenlehne entgegengesetzt zueinander erstrecken.

Die Stangen 6, 7 sind an ihren unteren Enden 6a und 7a und ihren oberen Enden 6b und 7b mittels Schwenklager 14, 15, 16, 17 derart schwenkbar an horizontal verlaufenden Rückenlehnenrahmenteilen 4a und 4b schwenkbar gelagert, dass sie um eine im Wesentlichen in Längsrichtung der Rückenlehne und des Rückenlehnenrahmens 4 verlaufende Achse um maximal 90° gedreht werden können.

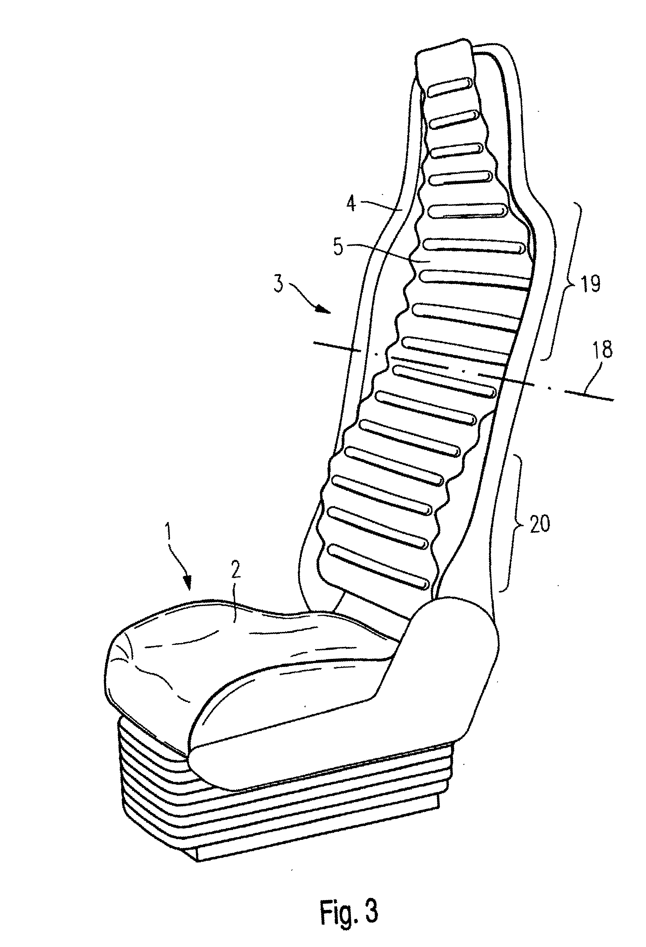

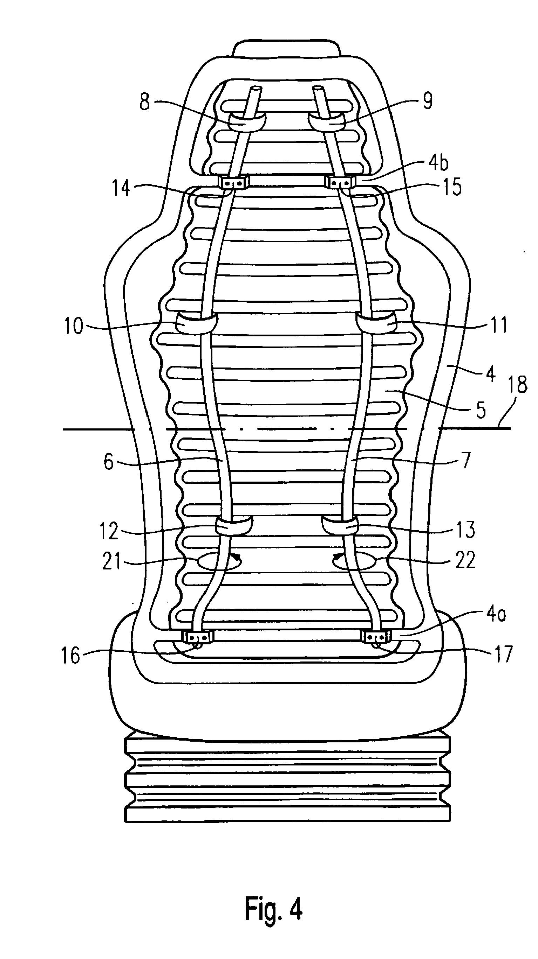

In Fig. 3 wird in einer schematischen perspektivischen Darstellung der Fahrzeugsitz mit verformter Rückenlehne gezeigt. Dieser Darstellung ist deutlich zu entnehmen, dass das flexible plattenähnliche Element 5 eine S-Form aufweist, die sich aus einer in Rückwärtsrichtung des Fahrzeugrichtung gerichteten Einbuchtung im Schulterbereich 19 und einer vorwärtsgerichteten Wölbung im Lendenwirbelbereich 20 zusammensetzt. In Zusammenschau mit der in Fig. 4 gezeigten schematischen Rückansicht des Fahrzeugsitzes mit verformter Rückenlehne wird deutlich, dass durch Drehen der Stangen 6, 7 um die in Längsrichtung der Rückenlehne verlaufenden gedachten Achsen, wie es durch die Pfeile 21 und 22 angedeutet ist, die S-Form der Stangen von einer sich in Breitenrichtung der Rückenlehne erstreckenden Ausrichtung in eine bezüglich des Fahrzeugsitzes vorwärtsgerichtete Ausrichtung übergeht. Ein derartiger Übergang kann stufenlos erfolgen und führt zu einer Schwenkbewegung des flexiblen, plattenähnlichen Elements um eine imaginäre Schwenkachse 18, die zwischen dem Lendenwirbelbereich und dem Schulterbereich in einer für unterschiedliche Wirbelsäulenlängen passend ausgetestete Höhe angeordnet ist.

Durch ein Verdrehen der Stangen 6, 7 wird in Abhängigkeit von der Größe des Drehwinkels eine unterschiedlich starke rückwärtsgerichtete Ausbuchtung im Schulterbereich und vorwärtsgerichtete Wölbung im Lendenwirbelbereich erreicht. Diese Drehung erfolgt ausschließlich durch ein gewolltes Drücken der Person mit ihren Schultern oder ihren Lendenwirbeln gegen die Rückenlehne. Sobald sich die für die Wirbelsäulenform der Benutzerform passende Form der Rückenlehne durch Verdrehen der Stangen eingestellt hat, stellt sich ein maximaler Sitzkomfort für die Person ein. Es findet somit eine automatische Anpassung der Rückenlehne an die Wirbelsäulenform der Person statt, ohne dass hierfür über aufwendige Mechanismen eine Verformung der Rückenlehne durch Verschenken der Rückenlehne nach hinten oder nach vorne und/oder durch Verschieben des Sitzteils erforderlich ist.

Der Fahrer kann absichtlich seine Wirbelsäulenform zur Einstellung einer neuen Sitzposition während des Fahrzustandes allein durch Druckausübung seiner Wirbelsäule im Schulter- und/oder Lendenwirbelbereich auf die Rückenlehne verändern und erfährt dadurch eine automatische Anpassung der Rückenlehnenform an seine neue Sitzposition bzw. Wirbelsäulenform bei maximalem Sitzkomfort.

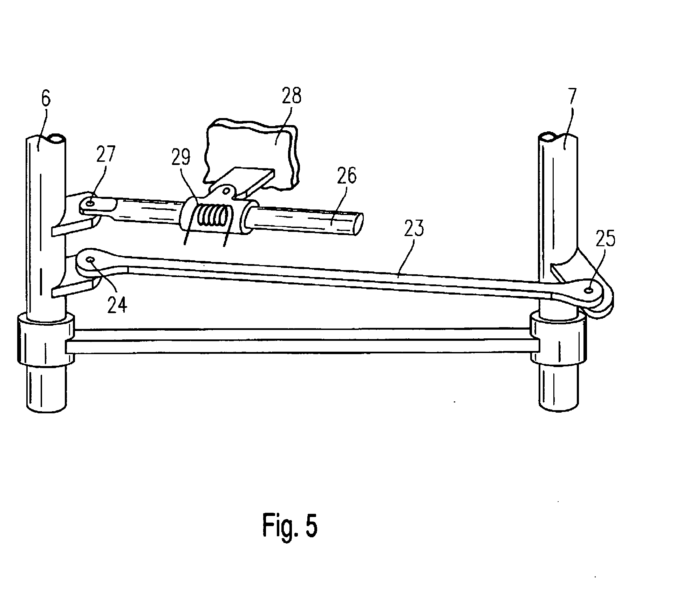

In Fig. 5 werden in einer schematischen Ausschnittsdarstellung Verbindungs- und Arretierungselemente für den Fahrzeugsitz gezeigt. Als Verbindungselement für eine Aufeinanderabstimmung der Drehbewegungen der Stangen 6, 7 ist ein Synchronisiergestänge 23 mit Gelenklagern 24 und 25 angeordnet, wobei die Gelenklager 24, 25 derart entgegengesetzt an den Stangen 6, 7 befestigt sind, dass die Stangen 6, 7 synchron eine entgegengesetzte Drehbewegung durchführen. Somit ist sichergestellt, dass sich die Rückenlehne gleichzeitig in der linken und rechten Hälfte zu selben Anteilen verformt.

Ein mit beiden Stangen 6, 7 verbundenes im Wesentlichen horizontal verlaufendes Gestänge 26, welches hier nur zur Hälfte dargestellt ist, dient in Verbindung mit einer spiralförmigen Feder 29 als Arretierungs- bzw. Bremseinrichtung für die durchzuführende Drehbewegung der Stangen. Hierfür ist das Gestänge 26 mittels einer Gelenklagerung 27 mit der Stange 6 und ebenso an der Stange 7 (nicht dargestellt) befestigt.

Die Feder 29 umgreift das Gestänge 26 mit kreisförmigen Querschnitt und ist mittels einer Halterung 28 an dem hier nicht näher dargestellten Rückenlehnenrahmen befestigt. Die Spiralfeder 29 kann zur Vergrößerung ihres Innendurchmessers an ihren Enden auf- bzw. zugedreht werden, so dass eine mehr oder weniger feste Umklammerung der Stange 26 durch die Spiralfeder 29 stattfindet. Hierdurch ergibt sich eine mehr oder weniger starke Reibung zwischen der Oberfläche der Stange 26 und den Innenflächen der Spiralfeder 29, die zu einer Brems- oder sogar Arretierungswirkung führt. Auf diese Weise können die Stangen 6, 7 in ihrer momentanen Drehstellung fixiert werden. Dies ermöglicht, dass der Fahrer entgegen seiner durch seine Wirbelsäule üblich ausgeübten Belastung auf die Rückenlehne absichtlich eine Verformung der Rückenlehne einstellen kann, die beispielsweise eine gewollt starke vorwärtsgerichtete Wölbung des Lendenwirbelbereiches beinhaltet.

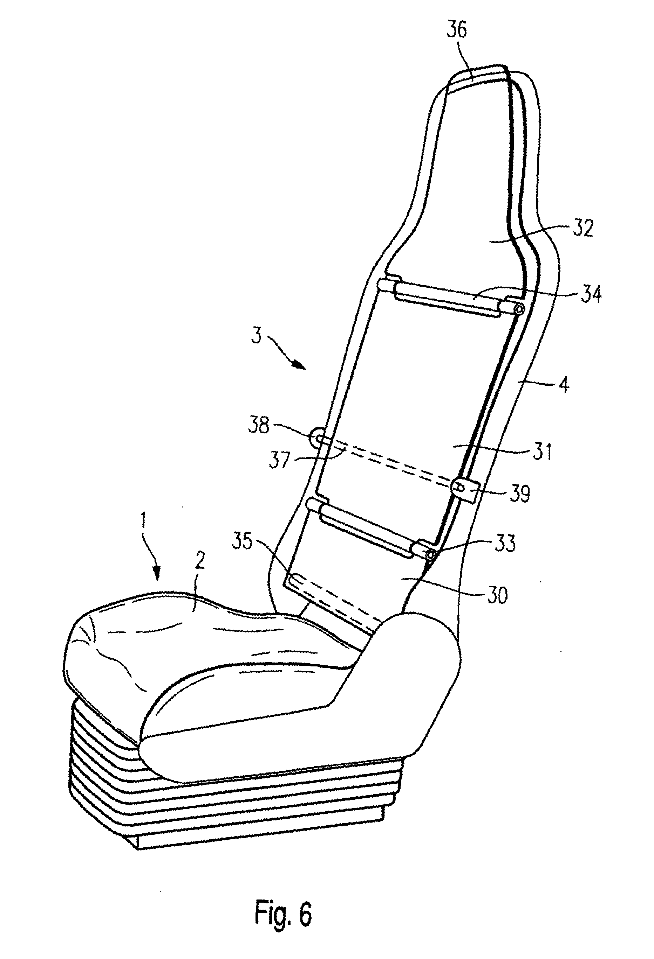

In Fig. 6 ist in einer schematischen perspektivischen Darstellung ein Fahrzeugsitz mit einer geraden Rückenlehne gezeigt. Wie dieser Darstellung zu entnehmen ist, setzt sich die Rückenlehne, die ohne Rückenlehnenpolster dargestellt ist, aus insgesamt drei Platten 30, 31 und 32 zusammen, die mittels Gelenklager 33 und 34 miteinander verbunden sind.

Gleitlager 35 und 36 sind am unteren Ende der unteren Platte 30 und am oberen Ende der oberen Platte 32 gegenüber dem Rückenlehnenrahmen 4 angeordnet, so dass eine gleitende Bewegung der unteren und oberen Platte 30, 32 gegenüber dem Rückenlehnenrahmen 4 bei Verschwenken der unteren und oberen Platte 30, 32 durchführbar ist.

Eine reale Achse 37 ist mit der mittleren Platte 31 verbunden und in Rahmenteilen 38, 39, die links- und rechtsseitig am Rückenlehnenrahmen 4 befestigt sind, drehbar gelagert.

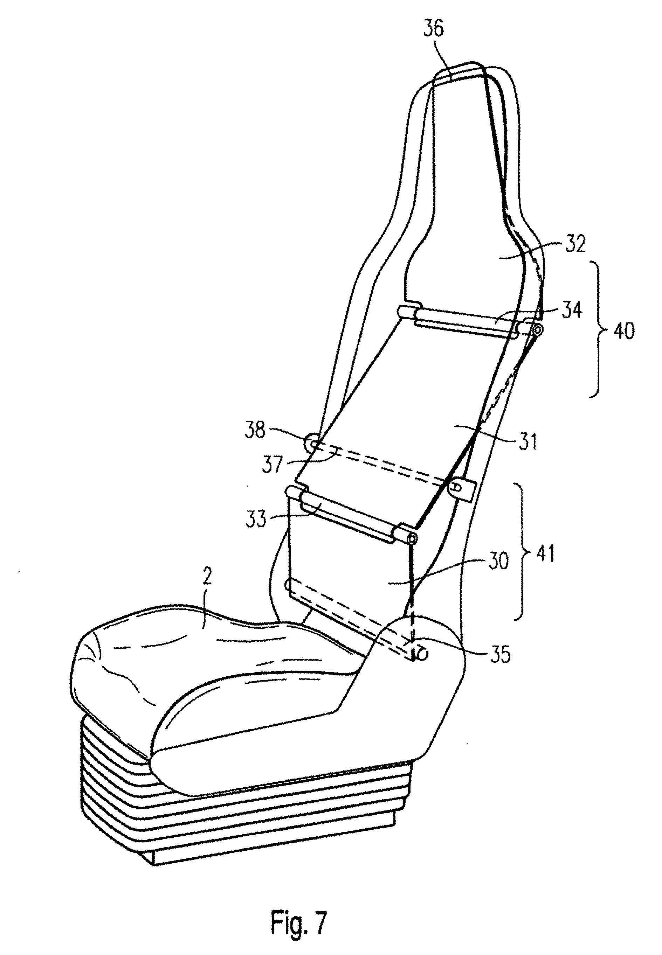

In Fig. 7 wird der Fahrzeugsitz mit verformter Rückenlehne dargestellt. Bei einer stattfindenden Verformung der Rückenlehne, initiiert durch eine Druckbewegung des Rückens der Benutzerperson im Schulter- und/oder Lendenbereich, stellt sich eine rückwärtsgerichtete Verformung im Schulterbereich 40 und eine vorwärtsgerichtete Verformung im Lendenwirbelbereich 41 ein. Dies ist deutlich der Fig. 7 zu entnehmen. Hierfür findet eine Schwenkbewegung der Platten 30, 31, 32 um die reale Achse 37 statt.

Eine derartige Schwenkbewegung der Platte 30 - 32 führt zu einer Verschiebung der unteren und oberen Platte 30, 32 gegenüber dem Rückenlehnenrahmen 4 in den Gleitlagern 35 und 36.

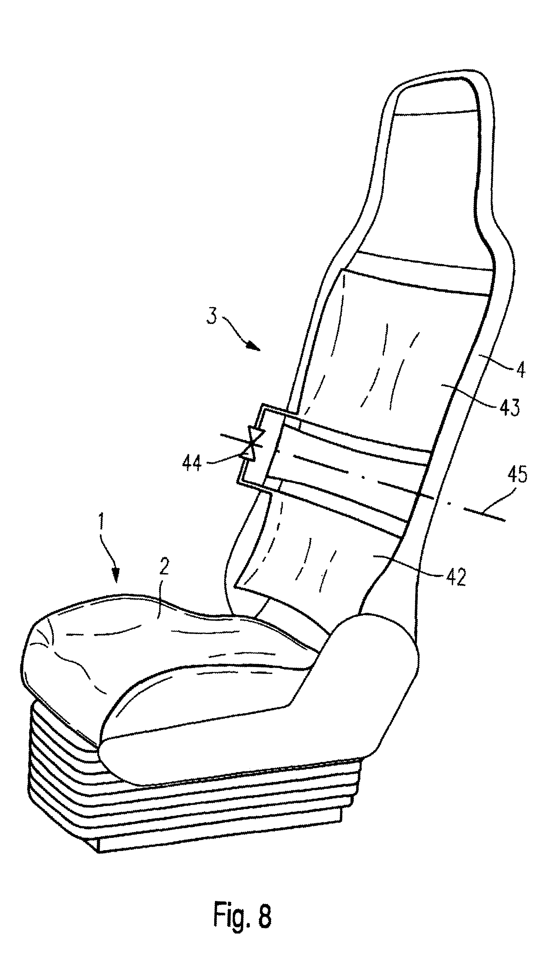

In Fig. 8 wird in einer schematischen perspektivischen Darstellung ein Fahrzeugsitz mit gerader Rückenlehne gemäß einer Ausführungsform der Erfindung gezeigt. Der Fahrzeugsitz 1 mit dem Sitzteil 2 und der Rückenlehne 3 weist eine untere Gasblase bzw. Luftpolster 42 und eine obere Gasblase bzw. Luftpolster 43 auf. Beide Gasblasen sind mittels eines Absperrventils 44 und einer Verbindungsleitung miteinander verbunden.

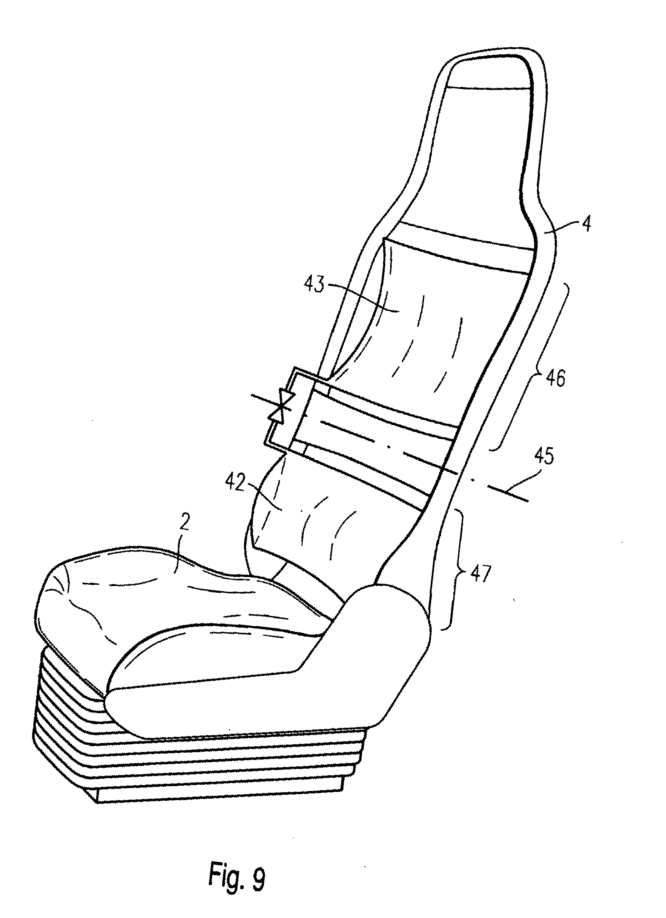

Wie in Fig. 9 deutlich zu sehen ist, findet eine Luftverlagerung bezüglich der imaginären Achse 45 von dem oberen Luftpolster 43 in das untere Luftpolster 42 zur Bildung einer Ausbuchtung im Schulterbereich 46 der Rückenlehne und einer vorwärtsgerichteten Wölbung 47 im Lendenwirbelbereich statt. Dies wird wiederum durch eine Druckbeaufschlagung der Rückenlehne im Schulterbereich 46 mittels der Schulter der Benutzerperson erreicht. Sobald ein gewünschter Wölbungs- bzw. Ausbuchtungszustand erreicht ist, kann eine Fixierung dieses Zustandes mittels des Absperrventils 44 erreicht werden.

Derartige Luftpolster ergeben aufgrund ihrer Gaseigenschaften vorteilhaft einen maximalen Sitzkomfort.

### Bezugszeichenliste

- 1: Sitzteil
- 2: Sitzpolster
- 3: Rückenlehne
- 4: Rückenlehnenrahmen
- 4a, 4b: horizontale Abschnitte des Rückenlehnenrahmens
- 5: flexibles plattenähnliches Element
- 6, 7: Stangen
- 6a, 7a: untere Enden der Stangen
- 6b, 7b: obere Enden der Stangen
- 8, 9, 10, 11, 12, 13: Verbindungselemente zwischen Stangen und flexiblem Element
- 14, 15, 16, 17: Schwenklager
- 18: imaginäre Achse
- 19, 40, 46: Schulterbereich
- 20, 41, 47: Lendenwirbelbereich
- 21, 22: Drehrichtungen der Stangen
- 23: Synchronisiergestänge
- 24, 25: Gelenkverbindungen
- 26: Arretierungsgestänge
- 27: Gelenkverbindung
- 28: Rückenrahmenteil
- 29: Spiralfeder

- 30, 31, 32: Platten
- 33, 34: Gelenklagerungen
- 35, 36: Gleitlagerungen
- 37: reale Achse
- 38, 39: Achsenlagerungen
- 42, 43: Gasblasen
- 44: Arretierungsventil
- 45: imaginäre Achse

## Patentansprüche

1. Sitz mit Rückenlehne (3) und Sitzteil (1), insbesondere für Fahrzeuge, wobei die Rückenlehne (3) einen Rückenlehnenrahmen (4) und dazwischen angeordnete Elemente (42, 43) zur Bildung einer S-förmigen Rückenlehne mit einem in Vorwärts- oder Rückwärtsrichtung verformbaren Schulterbereich (46) und einem in Vorwärts- oder Rückwärtsrichtung verformbaren Lendenwirbelbereich (47) umfasst,
wobei
die Elemente (42, 43) um eine zwischen dem Schulter- und dem Lendenwirbelbereich (46; 47) sich horizontal erstreckende durch den Rückenlehnenrahmen (4) oder parallel dazu verlaufende, imaginäre Achse (45) derart gelagert sind, dass ohne Veränderung einer gegenüber dem Sitzteil (1) bestehenden Neigungsstellung der Rückenlehne (3) durch eine Verformung des Schulterbereichs (46) bzw. des Lendenwirbelbereichs (47) in Rückwärtsrichtung selbsttätig eine Verformung des Lendenwirbelbereichs (47) bzw. Schulterbereichs (46) in Vorwärtsrichtung einstellbar ist,
**dadurch gekennzeichnet, dass**
die Elemente nur eine obere und nur eine untere Gasblase (42, 43), die ober- und unterhalb der imaginären Achse (45) angeordnet ist, umfassen, wobei die Gasblasen mittels eines Sperrventils (44) und einer Verbindungsleitung zum Austausch von Gas miteinander verbunden sind und das Sperrventil zur Vermeidung eines Gasaustauschs zwischen den Gasblasen zur Einstellung einer dauerhaften S-Form verwendbar ist, wobei eine Veränderung im Schulter- und Lendenbereich der Rückenlehne in ihrer Geschwindigkeit durch das Sperrventil variierbar ist.

## Claims

1. Seat with backrest (3) and sitting surface (1), in particular for motor vehicles, wherein the backrest (3) comprises a backrest frame (4) and, disposed between it, elements (42, 43) for forming an S-shaped backrest with a shoulder area (46) that is reconfigurable in the forwards and backwards directions and a lumbar spine area (47) that is reconfigurable in the forwards and backwards directions, wherein
the elements (42, 43) are mounted about an imaginary axis (45) extending horizontally between the shoulder and lumbar spine areas (46; 47) and running through the backrest frame (4) or parallel with it in such a way that, without changing an existing inclination setting of the backrest (3) relative to the sitting surface (1), a reconfiguration of the shoulder area (46) or the lumbar spine area (47) respectively in the forwards direction is adjustable automatically by reconfiguring the shoulder area (19) or the lumbar spine area (20) in the backwards direction respectively, **characterized in that**
the elements comprise only one upper and only one lower gas pocket (42, 43), disposed above and below the imaginary axis (45), wherein the gas pockets are connected together by means of a pressure-regulating valve (44) and a connecting line for exchange of gas and the pressure-regulating valve is usable for avoidance of gas exchange between the gas pockets for adjustment of a permanent S-shape, wherein a change in the shoulder area and the lumbar area of the backrest is variable in speed by means of the pressure-regulating valve.

## Revendications

1. Siège présentant un dossier (3) et une partie d'assise (1), en particulier pour véhicules, dans lequel le dossier (3) comprend un cadre de dossier (4) et des éléments (42, 43) agencés à l'intérieur de celui-ci pour former un dossier en forme de S avec une zone pour les épaules (46) qui peut être déformée vers l'avant ou vers l'arrière, et une zone pour les vertèbres lombaires (47) qui peut être déformée vers l'avant ou vers l'arrière,
dans lequel :
les éléments (42, 43) sont montés autour d'un axe imaginaire (45) s'étendant horizontalement entre la zone pour les épaules et la zone pour les vertèbres lombaires (46 ; 47) et passant par le cadre de dossier (4) ou parallèlement à celui-ci, de telle sorte qu'une déformation vers l'avant de la zone pour les vertèbres lombaires (47) ou de la zone pour les épaules (46) peut être automatiquement réglée sans que soit pour autant modifiée une position d'inclinaison du dossier (3) existant par rapport à la partie d'assise (1) par une déformation vers l'arrière de la zone pour les épaules (46) ou de la zone pour les vertèbres lombaires (47),
**caractérisé en ce que**
les éléments comprennent seulement une bulle de gaz supérieure et seulement une bulle de gaz inférieure (42, 43), qui sont agencées au-dessus et au-dessous de l'axe imaginaire (45), dans lequel les bulles de gaz sont reliées l'une à l'autre au moyen d'un clapet antiretour (44) et d'un conduit de raccordement pour échange de gaz, et le clapet antiretour peut être utilisé pour éviter un échange de gaz entre les bulles de gaz dans le cadre du réglage d'une forme en S durable, dans lequel une modification dans les zones pour les épaules et pour les vertèbres lombaires du dossier peut être variée en ce qui concerne la vitesse à l'aide du clapet antiretour.
